# FASCICULE DE BREVET EUROPEEN

(11) **EP 1 072 023 B1**
(45) Date de publication et mention de la délivrance du brevet: **11.04.2007**
(21) Numéro de dépôt: 00903764.9
(22) Date de dépôt: 09.02.2000
(51) Int. Cl.: G07F 7/08, G07F 7/10, G06K 7/08

(54) **TERMINAL DE PAIEMENT ACCEPTANT LES PAIEMENTS PAR CARTE SANS CONTACT**
ZAHLUNGSENDGERÄT ZUM ZAHLEN MIT KONTAKTLOSER KARTE
PAYMENT TERMINAL ACCEPTING CONTACTLESS CARD PAYMENT

(30) Priorité: 12.02.1999 FR 9901896
(43) Date de publication de la demande: 31.01.2001
(73) Titulaire: SAGEM MONETEL, 75015 Paris (FR)
(72) Inventeur: ROUX, Pascal, F-26120 Chabeuil (FR)
(74) Mandataire: de Beaumont, Michel
(86) Numéro de dépôt international: PCT/FR2000/000309
(87) Numéro de publication internationale: WO 2000/048142

(56) Documents cités:
- EP-A- 0 793 206
- WO-A-98/11498
- FR-A- 2 707 407
- FR-A- 2 736 451
- US-A- 4 877 950
- US-A- 5 057 676
- PATENT ABSTRACTS OF JAPAN vol. 1998, no. - , 27 février 1998 (1998-02-27) -& JP 09 305736 A (OKI ELECTRIC IND CO LTD), 28 novembre 1997 (1997-11-28) -& US 5 929 414 A (SAITOH MASATAKA)

## Description

La présente invention concerne un terminal de paiement prévu pour accepter des paiements par carte bancaire et par carte "sans contact".

Des terminaux de paiement dits portables permettent à un client, par exemple dans un restaurant, de ne pas se déplacer jusqu'à une caisse pour effectuer un paiement par carte bancaire. D'autres terminaux de paiement sont reliés à une caisse par un fil. Les terminaux actuels sont prévus pour accepter des paiements par carte magnétique ou par carte à puce.

On est en train de mettre en place un système de paiement par "porte-monnaie électronique" sous la forme d'une carte à communication sans contact. Il est actuellement prévu que des paiements par porte-monnaie électronique s'effectuent à l'aide de bornes fixes prévues à cet effet. Une telle borne comporte une zone à proximité de laquelle le client doit rapprocher la carte, cette zone étant marquée d'un logo caractéristique.

Un objet de la présente invention est de prévoir un terminal de paiement acceptant des paiements par carte sans contact, outre des paiements par carte bancaire classique.

Pour atteindre cet objet, la présente invention prévoit un terminal de paiement adapté à la lecture de cartes bancaires comportant un clavier de saisie d'un code confidentiel, et au moins un volet mobile. Le volet comprend en outre une antenne de communication avec des cartes sans contact, le volet indiquant, dans une première position, la zone de présentation des cartes sans contact.

Selon un mode de réalisation de la présente invention, le volet, dans sa première position, recouvre le clavier partiellement ou en totalité.

Selon un mode de réalisation de la présente invention, le terminal comprend des moyens pour réduire les influences mutuelles entre le clavier et l'antenne.

Selon un mode de réalisation de la présente invention, le volet comporte un logo de carte sans contact, visible lorsque le volet est dans sa première position.

Selon un mode de réalisation de la présente invention, le volet, dans une deuxième position permettant un accès au clavier, forme cache.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente une vue en perspective d'un terminal de paiement classique ;
la figure 2 représente un mode de réalisation de terminal de paiement selon l'invention dans une configuration prête à accepter un paiement par carte sans contact ; et
la figure 3 représente le terminal de la figure 2 dans une configuration destinée à accepter un paiement par carte bancaire classique.

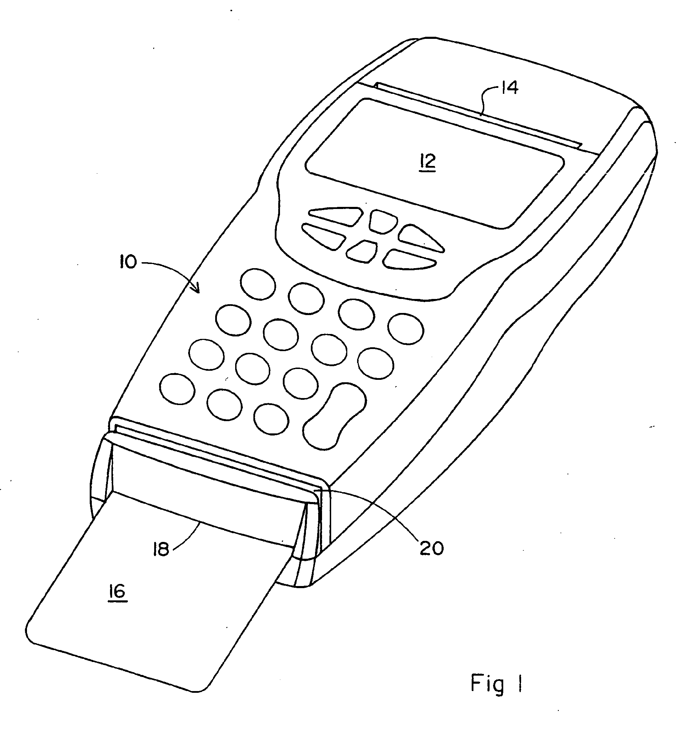

Comme l'illustre la figure 1, un terminal de paiement classique comporte un boîtier plat et allongé muni d'un clavier 10 et d'un affichage 12 sur sa face supérieure. Dans l'exemple représenté, le terminal est portable. La partie arrière du terminal est prévue pour loger un rouleau de papier pour l'édition de facturettes, ces facturettes sortant par une fente 14 de la face supérieure du boîtier.

Le terminal comporte, à sa partie avant, un dispositif de lecture de carte à puce. Comme cela est représenté, une carte à puce 16 est insérée horizontalement dans le dispositif de lecture par une fente 18 ouverte sur la face avant du boîtier.

Le terminal de la figure 1 peut en outre être prévu pour accepter des paiements par carte magnétique. Le terminal comporte pour cela, à l'avant, une fente 20 ouverte sur les parois latérales du terminal et sur sa face supérieure.

Selon l'invention, on prévoit d'utiliser un terminal du type de la figure 1, portable ou à fil, pour accepter également des paiements par carte sans contact. Pour cela, le terminal est muni d'une antenne sous forme de spires au niveau d'une zone dédiée du terminal.

La présente invention prévoit d'associer à cette zone dédiée un marquage clairement visible de l'extérieur pour indiquer à un client où il doit présenter sa carte de paiement sans contact.

Un aspect de la présente invention réside dans un choix judicieux de cette zone dédiée sans nuire à l'encombrement, à l'ergonomie et à l'esthétique du terminal.

Dans un mode de réalisation de la présente invention, la zone dédiée à la présentation de la carte sans contact est disposée au niveau du clavier 10 du terminal. Toutefois, le clavier 10 se prête mal à comporter des marquages tels qu'un logo caractéristique, permettant au client d'identifier l'endroit où il faut présenter la carte sans contact. En effet, ce logo serait entrecoupé des touches du clavier 10 et peu visible de ce fait. On pourrait envisager de dessiner le logo aussi sur les touches pour le rendre plus visible, mais ceci réduirait la lisibilité des touches.

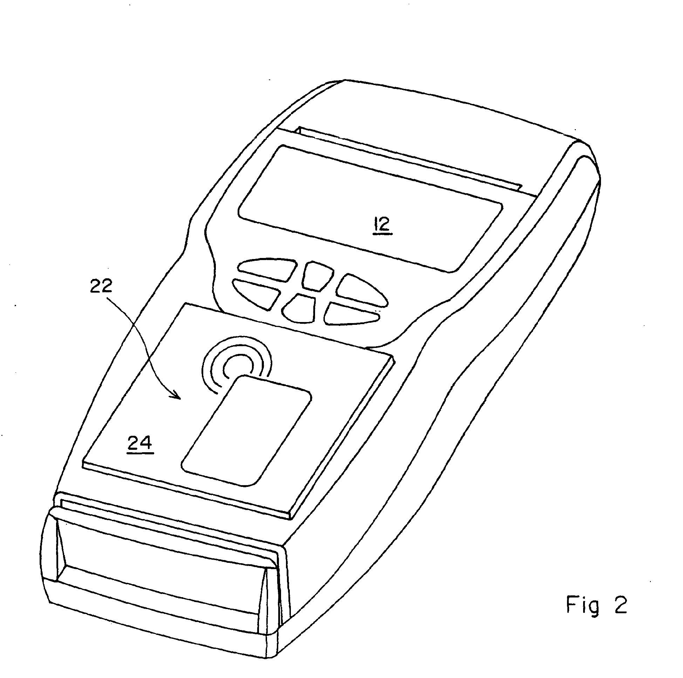

La figure 2 représente un mode de réalisation d'un terminal selon l'invention permettant d'éviter ce problème. Le logo 22 de carte sans contact est imprimé sur un volet 24 qui, dans une position prédéterminée, indique une zone de présentation de carte sans contact clairement identifiable. A la figure 2, le volet 24 recouvre totalement le clavier, mais il pourrait ne le recouvrir que partiellement. En effet, on peut envisager dans certaines applications que le client doive accéder à certaines touches en présentant sa carte sans contact, par exemple pour valider le paiement.

Par contre, lors d'un paiement par carte bancaire classique, le clavier doit être libéré pour saisir la somme à payer et pour que le client saisisse son code. Pour cela, selon un mode de réalisation, le volet 24 est articulé sur la face supérieure du terminal, par exemple entre le clavier et l'affichage 12.

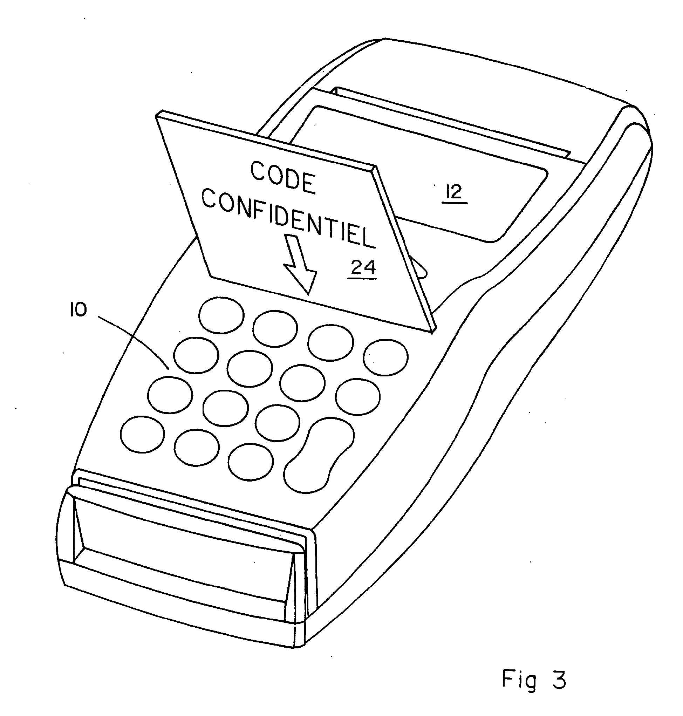

La figure 3 représente ce mode de réalisation du terminal, le volet 24 étant relevé. Pour que le volet 24 reste relevé à la position souhaitée, une solution consiste à prévoir du frottement au niveau de l'articulation. Une autre solution consiste à prévoir au niveau de l'articulation un système à ressort offrant au volet deux positions stables, l'une rabattue sur le clavier et l'autre relevée contre une butée.

Ce montage présente l'avantage que le volet, en position relevée, peut servir de cache permettant au client de taper son code à l'abri du regard de la personne se trouvant face à lui.

Selon des variantes de l'invention, l'articulation du volet est située sur un côté du terminal ou à l'avant du terminal. Le volet ne sert alors pas de cache.

Dans le cas où le volet ne sert pas de cache, il peut être transparent, par exemple pour des raisons esthétiques, le logo demeurant néanmoins opaque pour qu'il reste clairement identifiable lorsque le volet est rabattu sur le clavier.

Selon une autre variante, le volet est en plusieurs parties, par exemple deux articulées, chacune d'un côté respectif du clavier.

Le volet peut également être coulissant. Dans ce cas, il est de préférence souple et guidé de manière à s'enrouler dans un logement prévu à cet effet lorsqu'on l'ouvre pour libérer le clavier.

L'intégration d'une antenne de communication pour cartes sans contact dans un terminal pose certains problèmes techniques. En effet, le terminal comprend des conducteurs électriques, notamment au niveau des touches du clavier 10, qui sont susceptibles de former des boucles conductrices dans le champ de l'antenne. De telles boucles peuvent dissiper une partie non négligeable de l'énergie rayonnée par l'antenne. Pour éviter cela, il est classique de disposer un blindage entre l'antenne et des conducteurs susceptibles de former des boucles.

Si l'on dispose l'antenne au niveau du clavier 10, il n'est pas possible de blinder l'antenne par rapport aux conducteurs servant à exploiter les touches du clavier. Pour réduire l'influence de ces conducteurs sur l'efficacité de l'antenne, on pourra adopter l'une des solutions exposées dans la demande de brevet français N° 2 736 451, à savoir exploiter les touches et l'antenne de manière alternée, ou bien disposer les deux conducteurs de chaque touche aussi proches que possible l'un de l'autre, sur toute leur longueur.

Les demandes FR 2 707 407 et EP 0 974 469 montrent des terminaux pour carte à puce munis d'un cache mobile pour protéger des regards les moyens de validations

l'antenne est disposée dans l'épaisseur du volet 24, celui-ci étant alors de préférence rigide et articulé. L'antenne peut alors être blindée par rapport au clavier 10, un blindage étant prévu sur la face inférieure du volet. L'antenne est alors alimentée par des fils souples qui traversent la face supérieure du terminal au niveau de l'articulation du volet 24 sur le terminal, ou bien en prévoyant des charnières à contact électrique.

D'autres modifications et variantes de la présente invention pourront être apportées par l'homme de l'art dans le domaine défini par les revendications ci-après.

## Revendications

1. Terminal de paiement adapté à la lecture de cartes bancaires comportant un clavier (10) de saisie d'un code confidentiel et au moins un volet mobile (24), **caractérisé en ce que** ce volet comprend une antenne de communication avec des cartes sans contact, le volet indiquant, dans une première position, la zone (22) de présentation des cartes sans contact.

2. Terminal de paiement selon la revendication 1, **caractérisé en ce que** les dimensions du volet (24) sont telles que, dans sa première position, il recouvre le clavier partiellement ou en totalité.

3. Terminal de paiement selon la revendication 1, **caractérisé en ce que** l'antenne est disposée dans le volet (24).

4. Terminal de paiement selon la revendication 1, **caractérisé en ce qu'**il comprend des moyens pour réduire les influences mutuelles entre le clavier et l'antenne.

5. Terminal de paiement adapté à la lecture de cartes bancaires comportant un clavier (10) de saisie d'un code confidentiel et au moins un volet mobile (24), **caractérisé en ce que** ce volet comprend une antenne de communication avec des cartes sans contact, le volet comprenant sur sa face externe un logo de carte sans contact indiquant, dans une première position, la zone (22) de présentation des cartes sans contact.

6. Terminal de paiement adapté à la lecture de cartes bancaires comportant un clavier (10) de saisie d'un code confidentiel et au moins un volet mobile (24), **caractérisé en ce que** ce volet comprend une antenne de communication avec des cartes sans contact, le volet indiquant, dans une première position, la zone (22) de présentation des cartes sans contact et permettant, dans une deuxième position, l'accès au clavier tout en formant cache de saisie de code confidentiel.

## Claims

1. A payment terminal adapted to the reading of credit cards comprised of a keyboard (10) for entering a confidential code, and at least one mobile flap (24), **characterized in that** this flap further includes an antenna for communicating with contactless cards, the flap indicating, in a first position, a presentation area (22) for the contactless cards.

2. The payment terminal of claim 1, **characterized in that** the dimensions of the flap (24) are such that, in its first position, it partially or completely covers the keyboard.

3. The payment terminal of claim 1, **characterized in that** the antenna is arranged in the flap (24).

4. The payment terminal of claim 1, **characterized in that** it includes means for reducing the mutual influences between the keyboard and the antenna.

5. A payment terminal adapted to the reading of credit cards including a keyboard (10) for entering a confidential code and at least one mobile flap (24), **characterized in that** this flap further includes an antenna for communicating with contactless cards, the flap including on its external surface a contactless card logo indicating, in a first position, a presentation area (22) for the contactless cards.

6. A payment terminal adapted to the reading of credit cards including a keyboard (10) for entering a confidential code and at least one mobile flap (24), **characterized in that** this flap further includes an antenna for communicating with contactless cards, the flap indicating, in a first position, a presentation area (22) for the contactless cards and enabling, in a second position, access to the keyboard while forming a mask while entering the confidential code.

## Patentansprüche

1. Zahlungsterminal, das in der Lage ist, Kreditkarten zu lesen und das wenigstens eine Tastatur (10) zur Eingabe eines Geheimcodes und wenigstens eine bewegbare Klappe (24) aufweist, **dadurch gekennzeichnet, dass** die Klappe ferner eine Antenne umfasst zum Kommunizieren mit kontaktlosen Karten, wobei die Klappe in einer ersten Position einen Präsentationsbereich (22) für die kontaktlosen Karten zeigt.

2. Zahlungsterminal nach Anspruch 1, **dadurch gekennzeichnet, dass** die Abmessungen der Klappe (24) derart gewählt sind, dass sie in ihrer ersten Position teilweise oder vollständig die Tastatur abdeckt.

3. Zahlungsterminal nach Anspruch 1, **dadurch gekennzeichnet, dass** die Antenne in der Klappe (24) angeordnet ist.

4. Zahlungsterminal nach Anspruch 1, **dadurch gekennzeichnet, dass** das Terminal Mittel umfasst zum Reduzieren der gemeinsamen Einflüsse zwischen der Tastatur und der Antenne.

5. Zahlungsterminal, das geeignet ist Kreditkarten zu lesen, und das eine Tastatur (10) umfasst zum Eingeben eines Geheimcodes und wenigstens eine mobile Klappe (24), **dadurch gekennzeichnet, dass** diese Klappe ferner eine Antenne umfasst zum Kommunizieren mit kontaktlosen Karten, wobei die Klappe an ihrer externen Oberfläche ein Logo für eine kontaktlose Karte besitzt, welches in einer ersten Position einen Präsentationsbereich (22) für die kontaktlosen Karten anzeigt.

6. Zahlungsterminal, das geeignet ist Kreditkarten zu lesen, und das eine Tastatur (10) zur Eingabe eines Geheimcodes und wenigstens eine bewegbare Klappe (24) aufweist, **dadurch gekennzeichnet, dass** diese Klappe ferner eine Antenne umfasst zum Kommunizieren mit kontaktlosen Karten, wobei die Klappe in einer ersten Position einen Präsentationsbereich (22) für die kontaktlosen Karten zeigt, und in einer zweiten Position einen Zugriff auf die Tastatur freigibt, während sie eine Abdeckung während der Eingabe des Geheimcodes bildet.
